# EUROPEAN PATENT APPLICATION

(11) **EP 1 367 530 A1**
(43) Date of publication of application: **03.12.2003**
(21) Application number: 02011944.2
(22) Date of filing: 29.05.2002
(51) Int. Cl.: G06K 11/18

(54) **Touch pen**

(71) Applicant: AboCom Systems, Inc., Hsinchu City, Taiwan (TW)
(72) Inventor: Chang, Chia-Lin, Pei-Tou, Tapei City (TW); Pai, Chun-Chung, Tan-Shui Town, Tapei Hsien (TW); Chang, Ya-Chi, Tao-Yuan City (TW)
(74) Representative: Weber, Joachim, Dr.

(57) **Abstract**

A touch pen (10) for inputting to a touch panel includes a contact body (12), an intra-body (14) including a pillared front section (16), a heavyweight section (18) near the front section (16) for increasing ability to hold weight, and a pillared rear section (20). The touch pen has a front tube (22) having a narrow opening (24) formed at one end of the tube for clipping the contact body (12), and a hole (26) formed at an opposite end of the tube for packaging the front section (16) of the intra-body (14). The pen (10) includes a pillared rear tube (28) for packaging the rear section (20) of the intra-body (14), the rear tube (28) further including a pillar (32) fixed at one end of the rear tube (28), a rear pen sheath (34) for packaging the pillar (32), and a rubber pen sheat (30) for packaging the heavyweight section (18) and for increasing comfort.

## Description

### BACKGROUND OF THE INVENTION

### 1. Field of the Invention

The present invention relates to a touch pen, and more particularly, to a touch pen that is well suited for increasing ability to hold weight and increase comfort, and a tube of the touch pen can be replaced with various types and colors at a user's will.

### 2. Description of the Prior Art

In our modern information-based society, the personal digital assistant (PDA) has become a popular consumer electric product. The PDA is usually used to process and record personal information, and a touch panel is a main component of the PDA. The touch panel is not only applied in the PDA, but also in many products, such as a notebook, a webpad, an e-book, and an informational guide machine. Generally, the touch panel utilizes simple buttons of the PDA, user's figures, or a touch pen as an inputting interface to control the PDA. Therefore, the PDA always uses one touch pen to control the PDA. But the user of the PDA, knows that the presentation touch pen is not convenient because using it wastes a lot of time and effort while writing articles in the PDA.

The conventional touch pen has various shapes and is made of different materials, but usually presents a short-pen molding. The touch pen can be a utility forming and made of plastic or metal materials. The touch pen can also be a three-section structure. However, the above-mentioned touch pens have the following disadvantages. The plastic touch pen has a very low weight, and is not elegant enough. The metallic touch pen has a heavier weight than the plastic touch pen and is durable, but has a bad touch feeling and scratches the touch panel easily. A middle section of the three-section touch pen is always made of iron (Fe) metal. Although the three-section touch pen combines the advantages and the disadvantages of the plastic touch pen and the metallic touch pen, the middle section of the touch pen is always too heavy. Thus causing a center-of-gravity position of the touch pen to be unbalanced, and the pen to be inconvenient to use and not suitable for kinesiology.

### SUMMARY OF THE INVENTION

It is therefore a primary objective of the claimed invention to provide a touch pen, which is compatible for increasing ability to hold weight and increase comfort, and is durable and graceful.

According to the claimed invention, a touch pen for inputting to a touch panel includes a contact body and an intra-body including a pillared front section, a heavyweight section near the front section for increasing ability to hold weight, and a pillared rear section. The touch pen also includes a front tube having a narrow opening formed at one end of the tube for clipping the contact body, and a hole formed at an opposite end of the tube for packaging the front section of the intra-body. The touch pen has a pillared rear tube for packaging the rear section of the intra-body, the rear tube further including a pillar fixed at one end of the rear tube, a rear pen sheath for packaging the pillar, and a rubber pen sheath for packaging the heavyweight section and for increasing comfort.

The metal intra-body of the touch pen of the claimed invention has the heavyweight section formed near the front section of the metal intra-body, which is near a handhold section, and the weight of the heavyweight section is a fixed multiple of the metal intra-body, so as to concentrate a weight of the touch pen on a front side of the touch pen. The touch pen has advantages of conforming to kinesiology and increasing ability to hold weight, and the rubber pen sheath is assembled at the heavyweight section for increasing comfort. The rear pen sheath is assembled at the end of the touch pen, which is disassembled and can be replaced with various types and colors at a user's will.

These and other objectives of the claimed invention will no doubt become obvious to those of ordinary skill in the art after reading the following detailed description of the preferred embodiment that is illustrated in the various figures and drawings.

### BRIEF DESCRIPTION OF THE DRAWINGS

- Fig.1: is a schematic diagram illustrating each component of a touch pen according to the present invention.
- Fig.2: is a schematic diagram illustrating the touch pen while the touch pen is being assembled according to the present invention.
- Fig. 3: is a schematic diagram illustrating the assembled touch pen according to the present invention.

### DETAILED DESCRIPTION OF THE PREFERRED EMBODIMENT

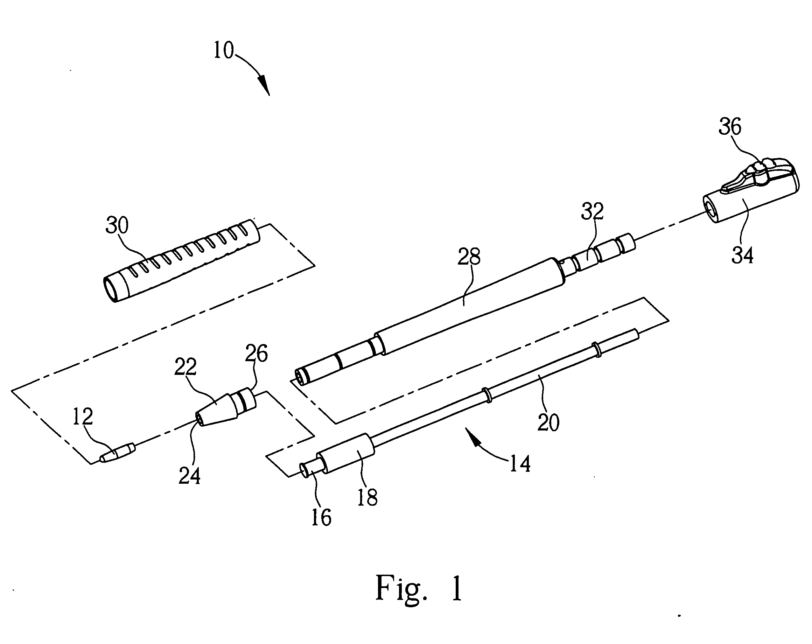

Please refer to Fig. 1, which is a schematic diagram illustrating each component of a touch pen 10 according to the present invention. As shown in Fig.1, the touch pen 10 of the present invention is used to input to a touch panel (not shown in Fig.1) The touch pen 10 includes a contact body 12, a metal intra-body 14 having a pillared front section 16, a heavyweight section 18 near the front section 16 for increasing ability to hold weight, and a pillared rear section 20. The touch pen also has a front tube 22 having a narrow opening 24 formed at one end of the tube 22 for clipping the contact body 12, and a hole 26 formed at an opposite end of the tube 22 for packaging the front section 16 of the intra-body 14. The pen includes a pillared rear tube 28 for packaging the rear section 20 of the intra-body 14, and a rubber pen sheath 30 for packaging the heavyweight section 18 and for increasing comfort while holding the touch pen 10.

In addition, the rear tube 28 of the touch pen 10 has a pillar 32 fixed at one end of the rear tube 28, and a rear pen sheath 34 is used to package the pillar 32. Furthermore, the rear pen sheath 34 includes a protruding clipper 36 for clipping the touch pen 10 to an electrical product (not shown in Fig.1). The contact body 12 of the touch pen 10 is made of a material, which does not easily scratch the touch panel, such as POM plastic. The metal intra-body 14 is made of copper (Cu) metal. A weight of the heavyweight section 18 is approximately 1.5 to 3.5 times a gross weight of the front section 16 and the rear section 20. The front section 16 and the rear section 20 are made of a plastic material, such as ABS plastic. The rubber pen sheath 30 includes a decorative design formed on a surface of the rubber pen sheath 30 for enhancing friction ability and preventing slipping while holding the touch pen 10.

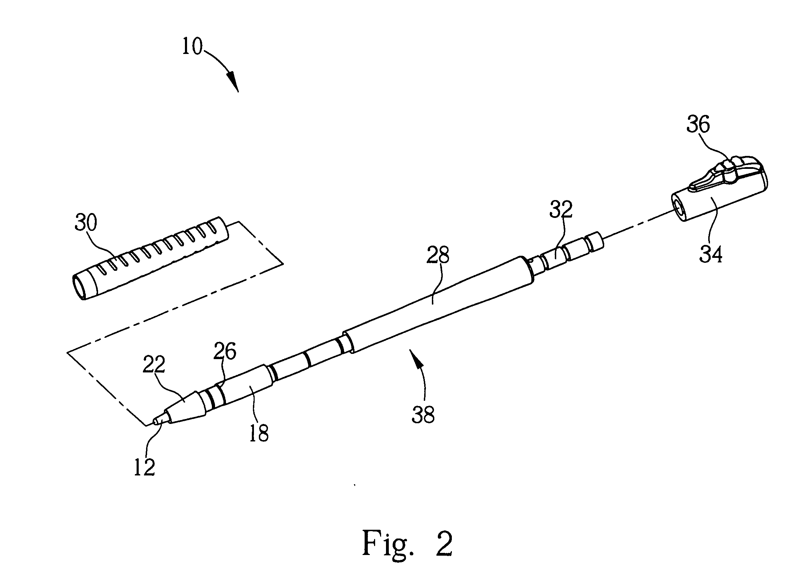

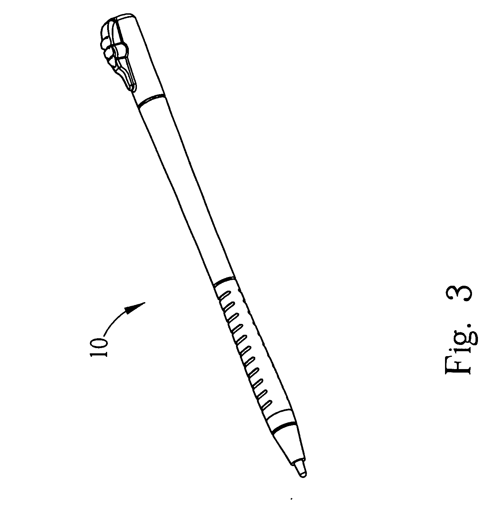

Please refer to Fig.2 to Fig.3, which are schematic diagrams illustrating the touch pen 10 during assembly and after assembly of the touch pen 10 according to the present invention. As shown in Fig.2, the contact body 12 of the touch pen 10 is lodged in the narrow opening 24 of the front tube 22, and the front section 16 of the metal intra-body 14 is put into the hole 26 of the front tube 22. Then, the rear tube 28 packages the rear section 20 of the metal intra-body 14 to form a utility forming part 38 . Further, the rubber pen sheath 30 and the rear pen sheath 34 are put around the heavyweight section 18 and the pillar 32 of the rear tube 28, respectively, and the touch pen 10 of the present invention is completed, as shown in Fig.3. The rear pen sheath 34 is a disassembled accessory and can be replaced with various types and colors at a user's will.

To sum up, the touch pen of the present invention assembles the components, which are made of different materials, to form a complex touch pen. The heavyweight section is formed near the front section of the metal intra-body, and the weight of the heavyweight is a fixed multiple of the metal intra-body so as to concentrate a weight of the touch pen on a front side of the touch pen. The touch pen has advantages of conforming to kinesiology and increasing ability to hold weight, and the rubber pen sheath is assembled at the heavyweight section for increasing comfort. Further, the rubber pen sheath has the decorative design formed on the surface of the rubber pen sheath for enhancing friction ability and preventing slipping while holding the touch pen.

In contrast to the prior art, the touch pen of the present invention is compatible for increasing ability to hold weight and increase comfort. The rear pen sheath assembled at the end of the touch pen and the rubber pen sheath assembled at the heavyweight section of the touch pen, which are disassembled and can be replaced with various types and colors at a user's will with each passing day.

Those skilled in the art will readily observe that numerous modifications and alterations of the device may be made while retaining the teachings of the invention. Accordingly, the above disclosure should be construed as limited only by the metes and bounds of the appended claims.

## Claims

1. A touch pen for inputting to a touch panel comprising:
a contact body;
an intra-body comprising a pillared front section, a heavyweight section near the front section for increasing ability to hold weight, and a pillared rear section;
a front tube comprising a narrow opening formed at one end of the tube for clipping the contact body, and a hole formed at an opposite end of the tube for packaging the front section of the intra-body;
a pillared rear tube for packaging the rear section of the intra-body, the rear tube further comprising a pillar fixed at one end of the rear tube;
a rear pen sheath for packaging the pillar; and
a rubber pen sheath for packaging the heavyweight section and for increasing comfort.

2. The touch pen of claim 1 wherein the contact body comprises plastic materials.

3. The touch pen of claim 1 wherein the intra-body comprises metal materials.

4. The touch pen of claim 1 wherein a weight of the heavyweight section is approximately 1.5 to 3.5 times a gross weight of the front section and the rear section.

5. The touch pen of claim 1 wherein the front tube and the rear tube both comprise plastic materials.

6. The touch pen of claim 1 wherein the rubber pen sheath includes a decorative design formed on a surface of the rubber pen sheath for enhancing friction ability and preventing slipping while holding the touch pen.

7. The touch pen of claim 1 wherein the rear pen sheath is disassembled and replaced with various types and colors at a user's will.

8. The touch pen of claim 7 wherein the rear pen sheath further comprises a protruding clipper.
